(19) Europäisches Patentamt
European Patent Office
Office européen des brevets

(11) EP 0 627 847 B1

(12) **EUROPEAN PATENT SPECIFICATION**

(45) Date of publication and mention of the grant of the patent:
**11.04.2001 Bulletin 2001/15**

(51) Int Cl.^7^: **H04N 3/15**, H01L 27/146, H04N 5/235

(21) Application number: **94303900.8**

(22) Date of filing: **31.05.1994**

(54) **Photoelectric conversion device**

Photoelektrische Umwandlungsanordnung

Dispositif de conversion photoélectrique

(84) Designated Contracting States:
**DE FR GB IT NL**

(30) Priority: **28.05.1993 JP 12708793**
**06.08.1993 JP 21354793**

(43) Date of publication of application:
**07.12.1994 Bulletin 1994/49**

(73) Proprietor: **CANON KABUSHIKI KAISHA**
**Tokyo (JP)**

(72) Inventors:
- **Miyawaki, Mamoru, c/o Canon K.K.**
  **Ohta-ku, Tokyo (JP)**
- **Shinohara, Mahito, c/o Canon K.K.**
  **Ohta-ku, Tokyo (JP)**
- **Ueno, Isamu, c/o Canon K.K.**
  **Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 226 338**
**EP-A- 0 260 858**
**EP-A- 0 444 938**
**EP-A- 0 489 724**
**EP-A- 0 522 732**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 627 847 B1

Printed by Jouve, 75001 PARIS (FR)

## Description

BACKGROUND OF THE INVENTION

Field of the Invention

The present invention relates to a photoelectric conversion device to be used in image sensors employed e.g. in copying machines, facsimile machines, video cameras and video recorders, optical sensors represented by AE Auto Exposure sensors and AF (Auto Focus) sensors of cameras and sensors for detecting positions of objects, more specifically, a photoelectric conversion device suited to detect a light such as a micro spot light.

Related Background Art

Figs. 1A to 1C respectively show an example of a known photoelectric conversion device (sensor) and Fig. 1A shows a 2-dimensional sensor which has 16 sensor cells, as photoelectric conversion elements, in total, including four sensor cells per line and four sensor cells per row.

In this sensor, each of the lines is selected in sequence from the above in the drawing by a vertical shift register VSR and four discrete signals are outputted by the horizontal shift register HSR in time series sequence to the output terminal OUT.

Signals of these sensor cells are output in sequence in combinations of line scanning and row scanning.

In an actual sensor, the number of sensor cells amounts to 100 to 100,000 and therefore the effect of reducing the read time and the scan time from one cell is obviously limited.

On the other hand, those signals from the sensor cells are visible image signals in most cases. In the case of such visible image, bright signals may be concentrated only at an extremely small area in one frame as the flame of a match in darkness and the remaining area may be occupied by dark signals.

Even in such case, the signals of all cells of the known sensor have been outputted in time series sequence and accumulated in an external random access memory, then required image signal processing has been carried out.

On the other hand, in case of the AE sensor (photo sensor for automatic exposure control), the size of the cell is expanded to reduce the number of separate parts and a configuration for ensuring short scanning time is used.

Fig. 1B shows a sensor as described above and each cell ($SS_{11}$ ... $SS_{22}$) has a larger light receiving area than the cell shown in Fig. 1A and the number of divisions is 4.

The sensor shown in Fig. 1B, however, cannot discriminate uniform irradiation of weak light onto the whole light receiving surface of the cell (ma 1 in Fig. 1C) from irradiation of strong light only at a part of the light receiving surface of the cell (ma 2 in Fig. 1C) and therefore it is difficult to apply this sensor to detection of a spot of light on a small area.

As described above, the sensor has required a long processing time or has malfunctioned in detection of a light (ma 2) shown in Fig. 1C.

For example, Fig. 2 is a plan view of a pixel of a known bipolar sensor. In Fig. 2, 51 is an emitter (serving as the main electrode area where signals based on accumulated carriers are outputted), 52 is an output line formed with Al or the like, 53 is a contact hole for connecting the emitter 51 and the output line 52, 54 is a base (serving as the control electrode area) where an optical charge is accumulated, 55 is a drive line formed with poly-Si or the like for sensor operation of the pixels, 56 is a capacitor $C_{OX}$ formed between the base 54 and the drive line 55, and 57 is a gate of a MOS transistor which is formed with the bases of an adjacent pixels as a source and a drain, and comprises part of the drive line 55. 58 is a thick oxidized film for separation between pixels.

Fig. 3 is a sectional view as Fig. 2 is sectioned along line XX' and Fig. 4 is a sectional view as Fig. 2 is sectioned along line YY'. In Figs. 3 and 4, 59 is a thin oxidized film, 60 is a high density n+ layer provided to separate pixel signals in the YY' direction, 61 is an $n^-$ epitaxial layer, 62 is a collector (serving as the main electrode area), and 63 is an inter-layer insulation film for separating wires 52 and 55.

In addition, Fig. 5 is an equivalent circuit diagram of an area sensor which is formed with the above-described pixels arranged in 2-dimensional format.

In Fig. 5, S is a pixel of the sensor (equivalently comprising a bipolar transistor 31, a capacitor $C_{ox}$4 and a PMOS transistor 5), 1 is a vertical output line to be connected to the emitter of the pixel S, 6 is a MOS transistor for resetting the vertical output line 1, 7 is a terminal for applying pulses to the gate of the MOS transistor 6, 8 is a horizontal drive line, 9 is a buffer MOS transistor for receiving the output of the vertical shift register and passing a sensor drive pulse, 10 is a terminal for applying the sensor drive pulse, 11 is a wire connected to the drains of PMOS transistors at the right and left ends of the pixel array, 12 is an emitter-follower circuit part for setting a source potential of the PMOS transistor 5 to refresh the pixel S, 13 is a PMOS transistor for setting the base potential of the emitter-follower 12, 14 is a power supply terminal connected to the drain terminal of the PMOS transistor 13, 15 is a terminal for applying pulses to the gate of the PMOS transistor 13, 18 is an accumulation capacitor for accumulating output signal from the pixel S, 19 is a MOS transistor for transferring output signals to the accumulation capacitor 18, 20 is a terminal for applying pulses to the gate of the MOS transistor 19 for transfer, 21 is a horizontal output line, 22 is a MOS transistor for receiving an output of a horizontal shift register and transferring output signals to the horizontal output line 21, 50 is a MOS transistor for resetting the horizontal output line 21, 23 is a terminal for applying pulses to the gate of the MOS transistor 50, and 24 is an amplifier.

A 2-dimensional solid image pickup apparatus shown in Fig. 5 is such that all pixels are reset at once, and can be used in a still video camera and the like.

The operation of this image pickup apparatus is briefly described below.

First a low-level pulse is applied to the terminal 15 to set the PMOS transistor to ON and the output of the emitter-follower circuit part to a positive potential. The output terminal of this emitter-follower circuit part 12 is connected to the source of the PMOS transistor for the pixel S and, if the source potential is sufficiently high enough to turn on the PMOS transistor 5 as compared with the gate potential, holes are injected into the base of the bipolar transistor 31 for pixels (referred to as the "first reset" up to this point). Then the transistor 6 is set to ON and the vertical output line 1 is set to the GND level by applying a high-level pulse to the terminal 7.

Next a forward bias is formed between the base and the emitter of the bipolar transistor 31 by driving the vertical shift register in the above state and applying a reset pulse for the pixels to the terminal 10 to reset in sequence the pixels of each line and set the base of the bipolar transistor 31 for all pixels to a fixed potential and then to the reverse bias (referred to as the "second reset" up to this point). After accumulation of photo carriers, a low-level pulse is applied to the terminal 7 to set the MOS transistor 6 to OFF, a read pulse is applied from the terminal 10 to each line selected according to the output of the vertical shift register, a forward bias is formed between the base and the emitter of the bipolar transistor 31, and the signal output of pixels for each line is accumulated in the accumulation capacitor 18 through the MOS transistor 19. The signal output accumulated in the accumulation capacitor 18 is transferred to the horizontal output line 21 through the transfer MOS transistor 22 selected by the horizontal shift register and output through the amplifier 24.

In this case, the accumulation time (Ts) of the sensor is a time from the end of the second reset to application of the read pulse to the terminal 10. In the case of a 1-dimensional linear sensor, the maximum value of the signals from each sensor cell (peak signal) is detected and the accumulation time is controlled according to this maximum value. In the case of a 2-dimensional area sensor, it is difficult to detect the peak signal because of the properties of the circuit and therefore it is also difficult to obtain an appropriate signal level for the whole image. For detecting the position of the pixel which presents the maximum output on the light receiving surface, there has been a problem that pixel information (or all pixel outputs) should be used and therefore the signal processing time would be long and a memory would be required.

EP-A-0226338 discloses a line sensor in which each photoelectric conversion cell has a double-emitter photoelectric bipolar transistor. The first emitter of each cell is used to provide a signal for read out from the sensor. All of the second emitters are connected together so as to provide a signal which represents the peak signal of all of the cells. This peak signal is provided to an amplification regulating circuit which controls the gain of an amplifier in the output circuit for the sensor. It is stated that the concept may also be applied to an area sensor having cells disposed two-dimensionally.

EP-A-0522732 relates to a system in which the minimum peak value and the maximum peak value are both continuously obtained from the cells of a line sensor during the photo-accumulation period, and the contrast range (the difference between the maximum peak and the minimum peak) is continuously monitored. It is proposed that, where two sensor columns are formed on one chip, there is the possibility that the two columns may have different numbers of cells and may also have different stray capacitances, and therefore separate minimum and maximum peak values are taken from each sensor column and the contrast range for each sensor column is monitored separately, with the contrast range monitoring circuit including means for compensating for the effects of the different numbers of cells and the different stray capacitances between the two sensor columns.

EP-A-0444938 discloses a photoelectric sensor in which several (for example eight) separate line sensors are all formed on one chip, with some of the line sensors extending at right angles to the others. A maximum peak value and a minimum peak value is provided from each line sensor.

EP-A-0577391 (published on 5 January 1994, before the filing date of the present application but after the claimed priority dates) discloses a solid state image pickup apparatus having photoelectric conversion pixels arranged in a two-dimensional array. Arrangements are disclosed for outputting the peak signal of each row and the peak signal of each column, whereby both the row and the column of the most strongly irradiated pixel can be known.

## Summary of the Invention

According to the present invention there is provided a photoelectric conversion device as set out in claim 1 and image processing apparatus as set out in claim 9. Optional features are set out in the remaining claims.

Embodiments of the present invention may provide a photoelectric conversion device capable of solving the above-described technical problems, detecting various types of lights and improving the processing speed, by providing the photoelectric conversion device with a plurality of groups each of which comprises a plurality of adjacent photoelectric conversion elements and means for outputting a peak signal of each of the above plurality of groups.

In other words, an embodiment of the present invention enables real-time signal processing by dividing a sensor array comprising a plurality of cells into a plurality of groups (blocks) and detecting the peak signal of each group.

The photoelectric conversion elements may be transistors each having a control region, on which charge carriers are accumulated, and one or more main regions from which the photoelectric conversion output is provided in response to applying a potential to the control region for forward biassing the control region with respect to the main region. The potential may be applied on drive lines which are capacitively coupled to the control regions.

Other embodiments and optional features of the present invention will be known from the following description and the accompanying drawings.

## BRIEF DESCRIPTION OF THE DRAWINGS

Figs. 1A - 1C are diagrams for illustrating known photoelectric conversion devices;

Fig. 2 is a plan view of a known pixel using a bipolar transistor;

Fig. 3 is a sectional view along line XX' in Fig. 2;

Fig. 4 is a sectional view along line YY' in Fig. 2;

Fig. 5 is an equivalent circuit diagram of an area sensor comprising a 2-dimensional array of pixels shown in Fig. 2;

Fig. 6 is a schematic circuit diagram of a photoelectric conversion device embodying a mode of the present invention;

Fig. 7 is a schematic circuit diagram of a photoelectric conversion device according to a first embodiment of the present invention;

Fig. 8 is a timing chart for illustrating the operation of the photoelectric conversion device according to the first embodiment;

Fig. 9 is a schematic circuit diagram of the photoelectric conversion device according to the second embodiment of the present invention;

Fig. 10 is a timing chart for illustrating the operation of the photoelectric conversion device according to the second embodiment;

Fig. 11 is a schematic circuit diagram of the photoelectric conversion device according to the third embodiment of the present invention;

Fig. 12 is a schematic circuit diagram of the photoelectric conversion device according to the fourth embodiment of the present invention;

Fig. 13 is a schematic circuit diagram of the photoelectric conversion device according to the fifth embodiment of the present invention; and

Fig. 14 is a schematic circuit diagram of the photoelectric conversion device according to the sixth embodiment of the present invention.

## DETAILED DESCRIPTION OF THE PREFERRED EMBODIMENT

Fig. 6 is a schematic circuit diagram showing an embodiment according to the present invention with sensor cells Sij (i=1, 2, 3, 4; j=1, 2, 3, 4).

The sensor cells are divided into four blocks each having four adjacent cells and in each block the cells are connected to a common signal output line, which is in turn connected to one or the other of two horizontal shift registers (HSR1 and HSR2).

A block is selected by the vertical shift register VSR and the horizontal shift register, and a peak signal is output to the terminal out1 or out2. The horizontal shift registers can be, of course, assembled into a single unit with one output terminal, or the peak signals from four blocks can be output in parallel from four output terminals.

Sensor cells to be used for the present embodiment are required such that the signal of a cell which receives the largest amount of light is generated on the output line when the output line is commonly connected to several cells, and a photo transistor which stores photo carriers in the control electrode area such as the base or the gate is preferably used.

The sensor cells are provided in an area sensor mode in which the cells are arranged in a 2-dimensional array. The size of the light receiving surface of each cell and the number of cells in each block are appropriately selected and designed in accordance with an application of the sensor. In addition, sensor cells are housed in a single chip as a semiconductor integrated circuit. Signals output from this sensor chip are processed as image signals in various ways by external circuits.

The first embodiment of the present invention is described, referring to Fig. 7. Bij (i, j = 1, 4) is a bipolar transistor of a photo sensor cell, Pij (i, j = 1, 4) is a P type MOS switch provided between the base areas of the above-described bipolar transistor, Mij (i, j = 1, 4) is a MOS switch; $M_1$j (j 1 - 4) is a MOS switch for resetting the sensor output line, $M_2$j (j = 1 - 4) is a switch for transferring signals from the output line to the capacitor, $M_3$j (j = 1 - 4) is a switch for resetting the potential of the signal readout capacitor Cj (j = 1 - 4), $M_4$j (j = 1 - 4) is a switch for selectively supplying output signals to the output line Y1 according to clock signals $\phi_1$, $\phi_2$, $\phi_3$ and $\phi_4$ from the shift register, and $M_5$ is a switch for resetting the output line 1. Y2 is a shift register and Y3 is an output amplifier.

A method for operating this sensor is described below, referring to the timing chart shown in Fig. 8.

The vertical output line VLi (i = 1 - 4) is reset to $V_{VC}$ voltage and the readout capacitor Cj (j = 1 - 4) is reset to $V_{CR}$ voltage by applying a high level pulse $\phi_{VC}$ to the N type MOS switch $M_1$j (j = 1 - 4) and a high level pulse $\phi_{CR}$ to the N type MOS switch $M_3$j (j = 1 - 4).

Next the pulse $\phi_{BR}$ of the P type MOS gate is set to a low level to set the P type MOS switch Pij (i, j=1-4) to ON and the base potential of the bipolar transistor of Bij (i,j = 1 - 4) is set to $V_{BR}$. In this case, a voltage of $V_{BR}$ should be set to be approximately at least 1V higher than $V_{VC}$. When the pulse $\phi_{VC}$ is set again to a high level after the pulse $\phi_{BR}$ to the P type MOS gate has been set to a high level and the P type MOS switch has been set to OFF, and the vertical line level is set to $V_{VC}$, the bipolar transistor is set to the forward bias and the base potential is converged to the constant potential determined by the emitter potential $V_{VC}$. As shown in Fig. 7, the emitters of $B_{11}$, $B_{12}$, $B_{21}$ and $B_{22}$ are commonly connected to the vertical line $VL_1$ and therefore the bases of the above four bipolar transistors are reset by the potential of the vertical line $VL_1$. A similar procedure is executed with respect to bipolar transistors of $B_{13}$, $B_{14}$, $B_{23}$ and $B_{24}$ blocks, bipolar transistors of $B_{31}$, $B_{32}$, $B_{41}$ and $B_{42}$ blocks, and bipolar transistors of $B_{33}$, $B_{34}$, $B_{43}$ and $B_{44}$.

When the pulse $\phi_{vc}$ is set to a low level, the vertical lines $VL_1$ - $VL_4$ come to a floating state and the accumulation period (Y4 in Fig. 8) of an optical signal of each cell starts.

The pulse $\phi_T$ is set to a high level to transfer signals to the signal readout capacitor Cj (j = 1 - 4). In this case, the potential $V_{CR}$ for resetting the readout capacitor should be set to be lower than the vertical line reset potential $V_{VC}$. If the voltage and related factors are set in advance as described above, the potential of the vertical line becomes lower than that in the preceding period when the N type MOS switch $M_2$j (j = 1 - 4) is set to ON by the $\phi_T$ pulse, and the bipolar transistor Bij (ij = 1 - 4) is set to the forward bias. In this case, the base-emitter bias is largest in each block for the bipolar transistor of the cell which has the largest optical signal level among the cells of the block. and the emitter potential has a value corresponding to the peak optical signal in that block.

When the $\phi_T$ pulse is set to a low level, a peak signal from $B_{11}$, $B_{12}$, $B_{21}$ and $B_{22}$ is read out to the capacitor $C_1$, a peak signal from $B_{31}$, $B_{32}$, $B_{41}$, and $B_{42}$ is read out to the capacitor $C_2$, a peak signal from $B_{13}$, $B_{14}$, $B_{23}$ and $B_{24}$ is read out to the capacitor $C_3$, and a peak signal from $B_{33}$, $B_{34}$, $B_{43}$ and $B_{44}$ is read out to the capacitor $C_4$.

According to scanning pulses $\phi_1$, $\phi_2$, $\phi_3$ and $\phi_4$ from the shift register Y2, signals accumulated in the capacitors are output through the amplifier Y3 and the output line Y1.

Since 2-dimensional information is compressed to a peak signal of a block area and is serially read out, all sensors are usable as means for determining the presence of an image at a high speed in a wide area, for example, to check whether light from an object has been detected on the sensors.

Specifically, when a user looks through a camera, a microscope or the like, light from an LED (which is flickering with externally applied, pulses) shines at and reflects from an eye of the user. If this reflected light is detected by the sensor according to the present embodiment, the reflected LED light is quickly detected with high accuracy and the presence of the user can be determined. Accordingly, it is clearly known that the device can now be started.

As another application, the sensor according to the present embodiment is useful in detecting the opening and closing of the eyes of an automobile driver. Light from an external LED is shone at the eyes of a driver according to the above method and the reflected light is received by the sensor of the invention. Though a high intensity signal can be detected if the light is reflected from an eye with a normal cornea, the intensity of the reflected light lowers when a driver is sleepy and the time of closed eyelids increases. When the sensor output is lower than the average intensity of the reflected light, a sleepiness preventing apparatus including a buzzer and a seat shaker can be operated to give a warning to the driver.

The peak signal information of the blocks is useful to detect product labels on factory lines. In addition, it is be also possible with the following structure to distinguish the peak signal of each block from the ambient light. A capacitor is connected to each peak output portion in series and signal accumulation is performed under the ambient light to clamp the accumulated signal at its level. Subsequently, accumulation is performed under signal light to detect change of a peak output. A comparator determines whether the detected change exceeds a predetermined level.

A second embodiment of the invention is described, referring to Fig. 9 showing an equivalent circuit diagram and Fig. 10 showing the timing chart. The same components as those in the embodiment 1 are given the same reference symbols and numerals and the descriptions of these components are omitted.

The second embodiment differs from the first embodiment in that each sensor cell is provided with a base potential control capacitor Cij (ij = 1 - 4) for carrying out a reversely biased accumulating operation. Such construction as described above eliminates a switch for resetting a capacitor for readout operation.

The operation is described below. Pulses $\phi_{VC}$ and $\phi_T$ are set to a high level and the vertical lines VL1 - VL4 and the capacitor Ci (i = 1 - 4) are set to $V_{VC}$.

The $\phi_{BR}$ pulse is changed over from an intermediate level to a low level to set the P type MOS to ON and the base potential is reset to the $V_{BR}$. After resetting, the pulse is reset to the intermediate level. The $V_{BR}$ level can be selected so that the bipolar transistor is set at OFF in this state.

Then, after the $\phi_{VC}$ pulse is set to the high level to set the vertical lines VL1 - VL4 to the $V_{VC}$ level, the

$\phi_{BR}$ pulse is changed over from the intermediate level to the high level. Thus the base potential of each bipolar transistor is increased by the amount given below through the capacitor Cij (ij = 1 - 4).

$$\frac{C_{ij}}{C_B + C_{ij}}(\phi_{BR}^{high\ level} - \phi_{BR}^{middle\ level})$$

The reset voltages $V_{VC}$ and $V_{BR}$ of the bipolar transistor can be set at a forward bias value at which current flows in this case.

As in the first embodiment, the emitters of bipolar transistors $B_{11}$, $B_{12}$, $B_{21}$ and $B_{22}$ of one block are connected to a common line VL1 and therefore the emitter current flows in this line and the base potential is reset to correspond to the emitter potential. This is the same with the blocks of other bipolar transistors. After the emitter current has flowed, the $\phi_{BR}$ pulse is reset to the intermediate level and simultaneously the $\phi_{VC}$ pulse of the reset MOS Mij is set to a low level to start accumulation of signals. Sensor cells are separated by a P type MOS Pij (ij = 1 - 4). If the $\phi_{BR}$ pulse and the $\phi_T$ pulse are set to a high level after completion of the accumulation, the peak signals of blocks are read out to capacitors $C_1$ - $C_4$. Subsequent readout is the same as in the first embodiment.

The third embodiment is described below, referring to Fig. 11. The same components as those in the embodiment 1 are given the same reference symbols and numerals and the descriptions of these components are omitted. In this embodiment, the wiring has been improved to ensure a symmetry with the vertical lines VL1 - VL4 of the first embodiment.

The vertical line VL1 is extended to the blocks of bipolar transistors B31, B32, B41 and B42 to be symmetrical to the vertical line VL2 and the vertical line VL3 is extended to the blocks of bipolar transistors B33, B34, B43 and B44 to be symmetrical to the vertical line VL4. With this arrangement, the parasitic capacitances of the vertical lines are made similar, so that the readout gains of all blocks are made similar and therefore deviations among the blocks are reduced.

The fourth embodiment is described, referring to Fig. 12. The fourth embodiment differs from the first to third embodiments in that the outputs of all peak output detection blocks BL1 - BL4 are not read out in one direction but are read in parallel in upper and lower directions and therefore the readout speed is improved. 72 and 73 are respectively a shift register, 74, 75, 80 and 80' are readout circuits for reading out the signals of blocks BL1, BL2, BL3 and BL4, 76, 77, 78 and 79 are vertical output lines of the blocks, and 70 and 71 are horizontal output lines.

The fifth embodiment is described, referring to Fig. 13. In this embodiment, the number of blocks is increased by using two types of vertical output lines, for example, a first Al wire and a second Al wire. Output lines 81 for BL11, output lines 83 for BL12, output lines 85 for BL21 and output lines 87 for BL22 are used respectively and, for example, the Al1 wire is used for these output lines, while output lines 82 for BL31, output lines 84 for BL32, output lines 86 for BL41 and output lines 88 for BL42 are used respectively and the Al2 wire is used for these output lines. The signals from these output lines are read out in parallel into the readout circuits 90 - 97, scanned in the shift register 98 and output to the output line 99. The number of divided blocks can be increased by combining the embodiments as described above.

The sixth embodiment is described, referring to Fig. 14. The sixth embodiment is intended to implement reading out of ordinary pixel data in addition to the peak signal of a desired block area of the sensor. 100 denotes a vertical shift register for driving the drive line for reading the bits. This embodiment employs a configuration in which the bipolar sensor B' ij (i,j = 1 - 4) is provided with two emitters, one of which is provided exclusively for reading the pixel signals and the other of which is provided for detecting the peak signals, the peak signal output being connected to the gate of a MOS amplifier.

The MOS amplifier comprises MOS switches $M_7$i (i = 1 - 4) and a switch $M_{75}$ and the peak outputs of the blocks are entered into the gates of MOS switches $M_7$i (i = 1 - 4). Reset switches $M_8$j (j = 1 - 4) and a reset pulse $\phi_{RS\text{-}EM}$ are provided to reset the vertical lines for detecting the peak signals. With this configuration, the added-up peak output of all rows is outputted from the amplifier 106. Addition in this case is not ordinary linear addition and is addition of square roots of the outputs. However, there is no problem in an application where the linearity is not demanded in the peak outputs.

Though the peak values of all rows are added in this embodiment, it is easy to implement separation of the peak value output into blocks for output.

The data accumulated in each pixel is output by the device operation described with respect to the first embodiment or Fig. 5.

In this embodiment, a plurality of spots of light are shone onto the sensor part and the peak signals are used to count up the number of spots of light. Pixel outputs can be used to check the relative positions of the spots of light and the image processing can be executed at a high speed.

The embodiment as described above can provide a photoelectric conversion device capable of detecting even extremely small spots of light and processing signals at a high speed.

In the first to sixth embodiments the photoelectric conversion elements are bipolar transistors and, if the present invention specifies a non-destructive sensor, such transistors with other constructions can be used as the sensor.

In each of the embodiments described above there is also a control means (not shown in the drawings) which generates the control signals and other voltages with timings as required for operation of the illustrated circuits.

## Claims

**1.** A photoelectric conversion device comprising a two-dimensional array of photoelectric conversion elements (B), characterised in that:

the array comprises a plurality of groups arranged two-dimensionally in the array, each group comprising a plurality of adjacent photoelectric conversion elements, and
each group is connected to peak signal output means (ϕBR,72,73,74,75,80,80' ,90-98) for outputting from the group a peak signal representing the maximum or the minimum of the photoelectric conversion outputs from the elements in the group.

**2.** A device according to claim 1 in which the peak signal output means comprises a plurality of capacitors (C1 to C4) for storing the said peak signals.

**3.** A device according to claim 1 or claim 2 in which the peak signal output means comprises a common output line (Y1,99) on which the peak signal of each group is output in turn.

**4.** A device according to claim 1 or claim 2 in which the peak signal output means comprises a plurality of output lines (70,71) on which the peak signals of respective groups are output in parallel.

**5.** A device according to any one of the preceding claims comprising pixel signal output means connected to the photoelectric conversion elements for outputting pixel signals representing the respective photoelectric conversion outputs of the respective elements.

**6.** A device according to claim 5 in which the pixel signal output means comprises a pixel signal output line, on which the pixel signals are output in turn, which is separate from any output line or lines on which the peak signals are output.

**7.** A device according to any one of the preceding claims in which the photoelectric conversion elements comprise bipolar transistors the bases of which accumulate photogenerated charge carriers and the emitters of which provide the photoelectric conversion outputs.

**8.** A device according to claim 5 or claim 6 in which the photoelectric conversion elements comprise bipolar transistors having first and second emitters, the bases of the transistors accumulating photogenerated charge carriers and both the first and second emitters providing the photoelectric conversion outputs.

**9.** An image processing apparatus comprising:

a photoelectric conversion device according to any one of claims 1 to 8; and
an image processing means arranged outside said photoelectric conversion device, for performing an image processing of a signal from said photoelectric conversion device.

## Patentansprüche

**1.** Photoelektrische Umwandlungseinrichtung mit einer zweidimensionalen Anordnung von photoelektrischen Umwandlungselementen (B),
**dadurch gekennzeichnet, daß**

die Anordnung eine Vielzahl von Gruppen, die bei der Anordnung zweidimensional angeordnet sind, umfaßt, wobei jede Gruppe eine Vielzahl von benachbarten photoelektrischen Umwandlungselementen umfaßt, und daß
jede Gruppe mit einer Spitzensignal-Ausgabeeinrichtung (ΦBR, 72, 73, 74, 75, 80, 80', 90 bis 98) zum Ausgeben eines Spitzensignals, das das Maximum oder das Minimum der photoelektrischen Umwandlungsausgaben von den Elementen in der Gruppe darstellt, von der Gruppe verbunden ist.

**2.** Einrichtung nach Anspruch 1,
**dadurch gekennzeichnet, daß**
die Spitzensignal-Ausgabeeinrichtung eine Vielzahl von Kondensatoren (C1 bis C4) zum Speichern der Spitzensignale umfaßt.

**3.** Einrichtung nach Anspruch 1 oder Anspruch 2,
**dadurch gekennzeichnet, daß**
die Spitzensignal-Ausgabeeinrichtung eine gemeinsame Ausgabeleitung (Y1, 99) umfaßt, bei der das Spitzensignal von jeder Gruppe der Reihenfolge nach ausgegeben wird.

**4.** Einrichtung nach Anspruch 1 oder Anspruch 2,
**dadurch gekennzeichnet, daß**
die Spitzensignal-Ausgabeeinrichtung eine Vielzahl von Ausgabeleitungen (70, 71) umfaßt, bei denen die Spitzensignale von jeweiligen Gruppen parallel ausgegeben werden.

**5.** Einrichtung nach einem der vorangehenden Ansprüche,

**gekennzeichnet durch**
eine Bildelementsignal-Ausgabeeinrichtung, die mit den photoelektrischen Umwandlungselementen zum Ausgeben von Bildelementsignalen, die die jeweiligen photoelektrischen Umwandlungsausgaben der jeweiligen Elemente darstellen, verbunden ist.

**6.** Einrichtung nach Anspruch 5,
**dadurch gekennzeichnet, daß**
die Bildelementsignal-Ausgabeeinrichtung eine Bildelementsignal-Ausgabeleitung umfaßt, bei der die Bildelementsignale der Reihenfolge nach ausgegeben werden und die von irgendeiner Ausgabeleitung oder -leitungen, bei denen die Spitzensignale ausgegeben werden, getrennt ist.

**7.** Einrichtung nach einem der vorangehenden Ansprüche,
**dadurch gekennzeichnet, daß**
die photoelektrischen Umwandlungselemente Bipolartransistoren umfassen, von denen die Basis licht-erzeugte Ladungsträger akkumulieren und von denen die Emitter die photoelektrischen Umwandlungsausgaben erzeugen.

**8.** Einrichtung nach Anspruch 5 oder Anspruch 6,
**dadurch gekennzeichnet, daß**
die photoelektrischen Umwandlungselemente Bipolartransistoren umfassen, die erste und zweite Emitter besitzen, wobei die Basis der Transistoren licht-erzeugte Ladungsträger akkumulieren und sowohl die ersten als auch die zweiten Emitter die photoelektrischen Umwandlungsausgaben erzeugen.

**9.** Bildverarbeitungseinrichtung, mit:

einer photoelektrischen Umwandlungseinrichtung nach einem der Ansprüche 1 bis 8; und mit einer Bildverarbeitungseinrichtung, die außerhalb der photoelektrischen Umwandlungseinrichtung angeordnet ist, zum Ausführen einer Bildverarbeitung eines Signals von der photoelektrischen Umwandlungseinrichtung.

## Revendications

**1.** Dispositif de conversion photoélectrique comportant un groupement à deux dimensions d'éléments de conversion photoélectrique (B), caractérisé en ce que :

le groupement comporte une pluralité de groupes agencés dans deux dimensions dans le groupement, chaque groupe comportant une pluralité d'éléments de conversion photoélectrique adjacents, et
chaque groupe est connecté à un moyen de sortie (ϕBR, 72, 73, 74, 75, 80, 80', 90-98) de signal de crête destiné à délivrer en sortie du groupe un signal de crête représentant le maximum ou le minimum des signaux de sortie de conversion photoélectrique provenant des éléments du groupe.

**2.** Dispositif selon la revendication 1, dans lequel le moyen de sortie de signal de crête comporte plusieurs condensateurs (C1 à C4) destinés à emmagasiner lesdits signaux de crête.

**3.** Dispositif selon la revendication 1 ou la revendication 2, dans lequel le moyen de sortie de signal de crête comporte une ligne de sortie commune (Y1, 99) sur laquelle le signal de crête de chaque groupe est délivré tour à tour en sortie.

**4.** Dispositif selon la revendication 1 ou la revendication 2, dans lequel le moyen de sortie de signal de crête comporte plusieurs lignes de sortie (70, 71) sur lesquelles les signaux de crête de groupes respectifs sont délivrés en sortie en parallèle.

**5.** Dispositif selon l'une quelconque des revendications précédentes, comportant un moyen de sortie de signaux de pixels connecté aux éléments de conversion photoélectrique pour délivrer en sortie des signaux de pixels représentant les signaux de sortie de conversion photoélectrique respectifs des éléments respectifs.

**6.** Dispositif selon la revendication 5, dans lequel le moyen de sortie des signaux de pixels comporte une ligne de sortie de signaux de pixels sur laquelle les signaux de pixels sont délivrés tour à tour en sortie, qui est séparée de toute ligne ou de toutes lignes de sortie sur lesquelles les signaux de crête sont délivrés en sortie.

**7.** Dispositif selon l'une quelconque des revendications précédentes, dans lequel les éléments de conversion photoélectrique comprennent des transistors bipolaires dont les bases accumulent des porteurs de charge photogénérés et dont les émetteurs produisent les signaux de sortie de conversion photoélectrique.

**8.** Dispositif selon la revendication 5 ou la revendication 6, dans lequel les éléments de conversion photoélectrique comprennent des transistors bipolaires ayant des premier et second émetteurs, les bases des transistors accumulant des porteurs de charge photogénérés et les premier et second émetteurs produisant tous deux les signaux de sortie de conversion photoélectrique.

**9.** Appareil de traitement d'image comportant :

un dispositif de conversion photoélectrique selon l'une quelconque des revendications 1 à 8 ; et

un moyen de traitement d'image agencé à l'extérieur dudit dispositif de conversion photoélectrique pour effectuer un traitement d'image d'un signal provenant dudit dispositif de conversion photoélectrique.

FIG. 1A

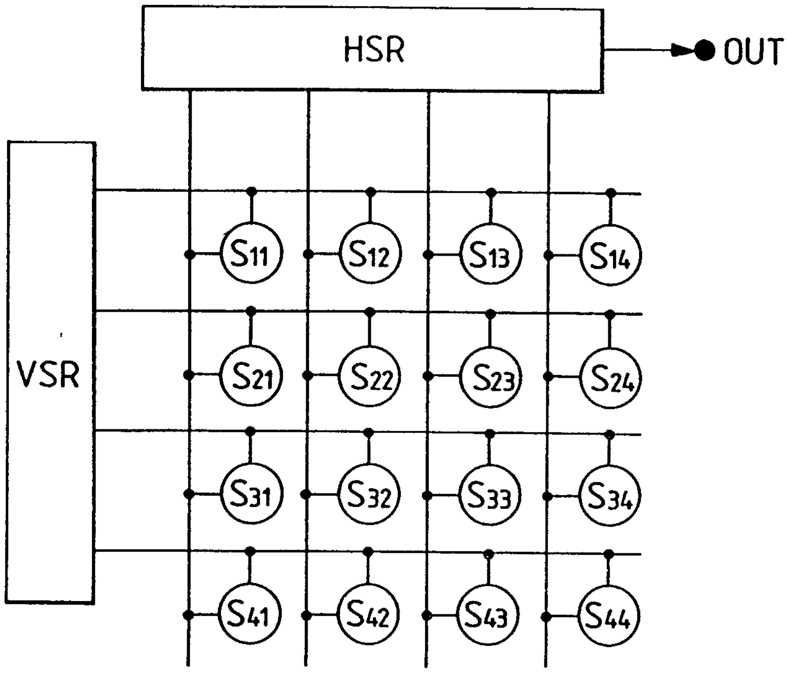
HSR
OUT
VSR
S11
S12
S13
S14
S21
S22
S23
S24
S31
S32
S33
S34
S41
S42
S43
S44

FIG. 1B

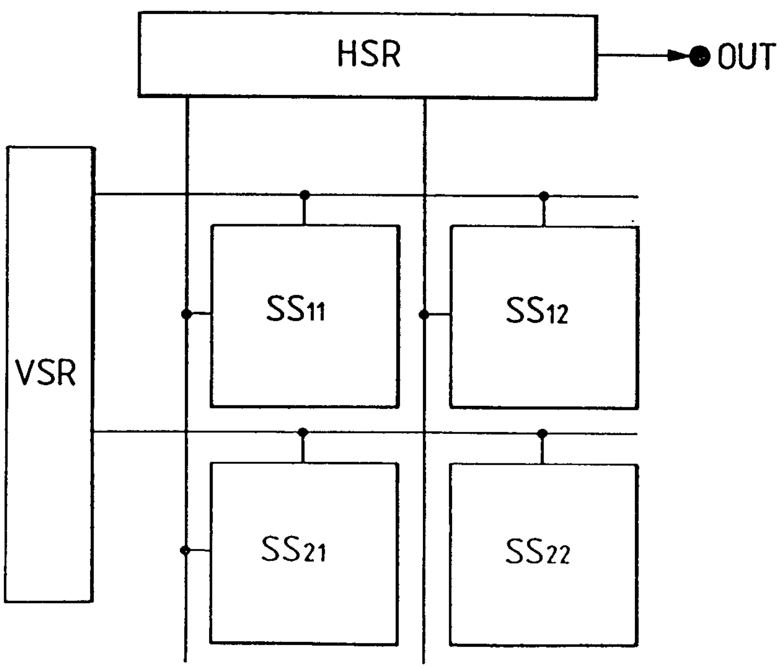
HSR
OUT
VSR
SS11
SS12
SS21
SS22

FIG. 1C

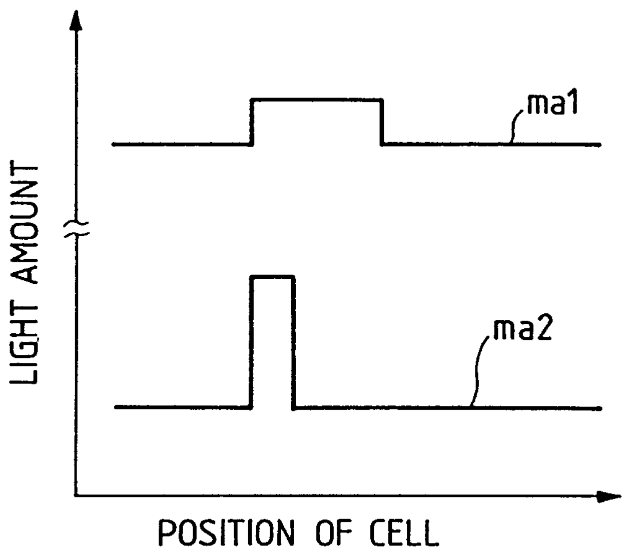
ma1
ma2
LIGHT AMOUNT
POSITION OF CELL

FIG. 2

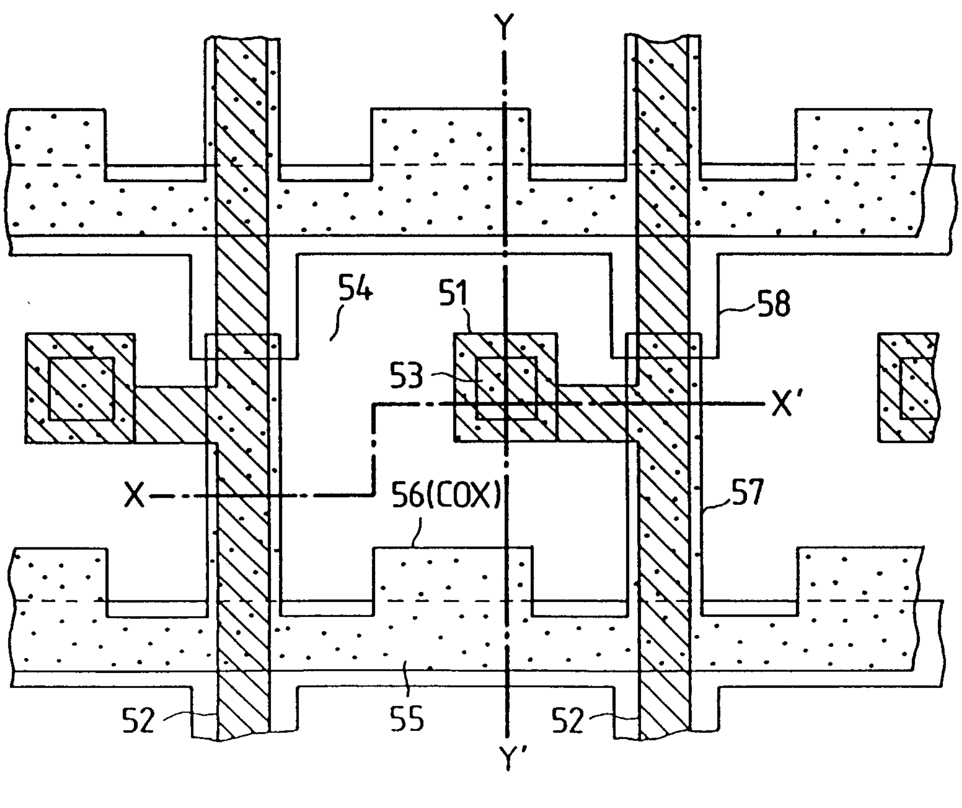
Y
54
51
58
53
X'
X
56(COX)
57
52
55
52
Y'

FIG. 3

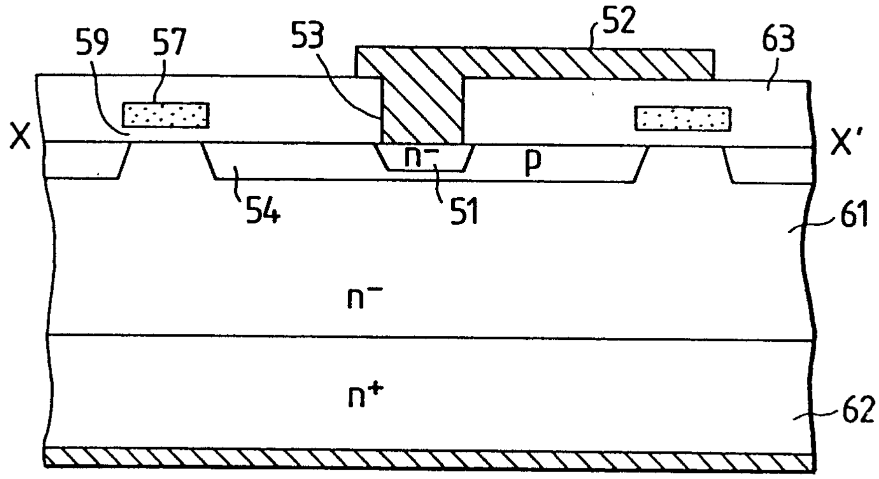
59
57
53
52
63
X
X'
n⁻
p
54
51
61
n⁻
n+
62

FIG. 4

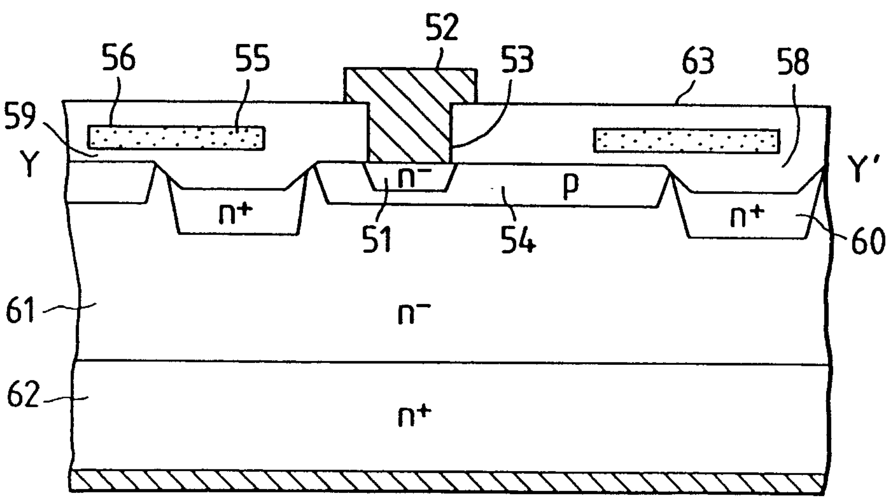
52
56
55
53
63
58
59
Y
Y'
n+
n⁻
p
n+
51
54
60
61
n⁻
62
n+

FIG. 5

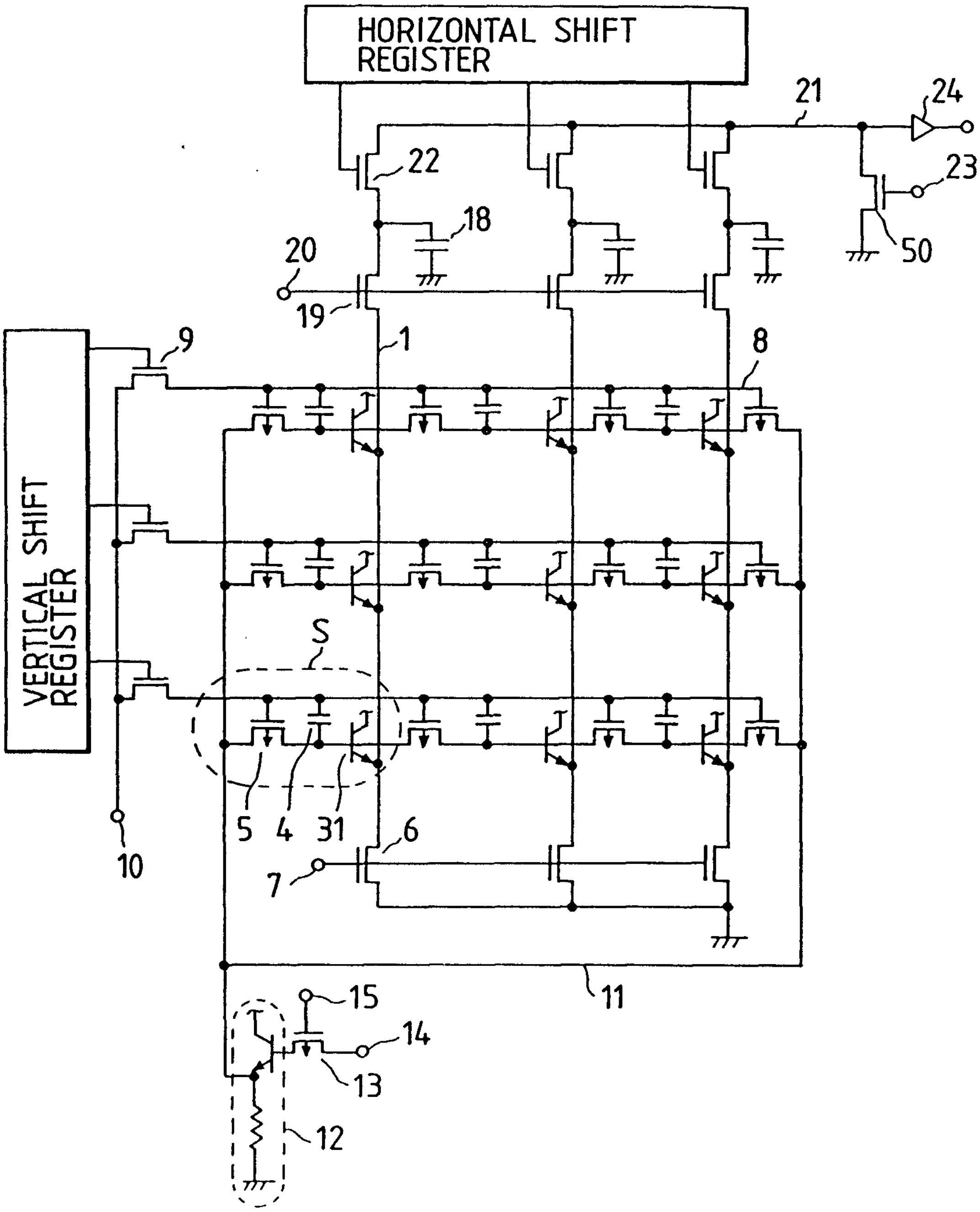
HORIZONTAL SHIFT REGISTER
VERTICAL SHIFT REGISTER
21
24
22
23
18
20
50
19
1
9
8
S
5
4
31
6
7
10
11
15
14
13
12

FIG. 6

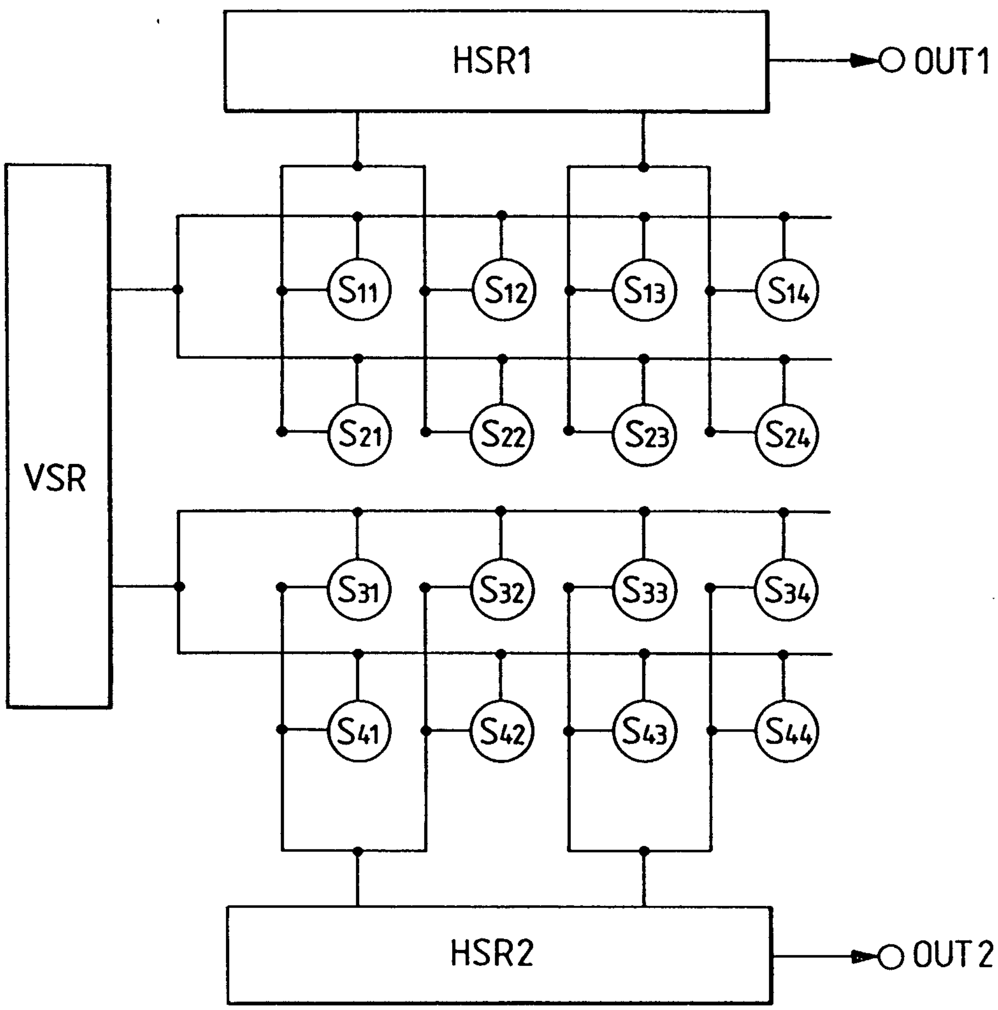
HSR1
OUT1
VSR
S11
S12
S13
S14
S21
S22
S23
S24
S31
S32
S33
S34
S41
S42
S43
S44
HSR2
OUT2

FIG. 7

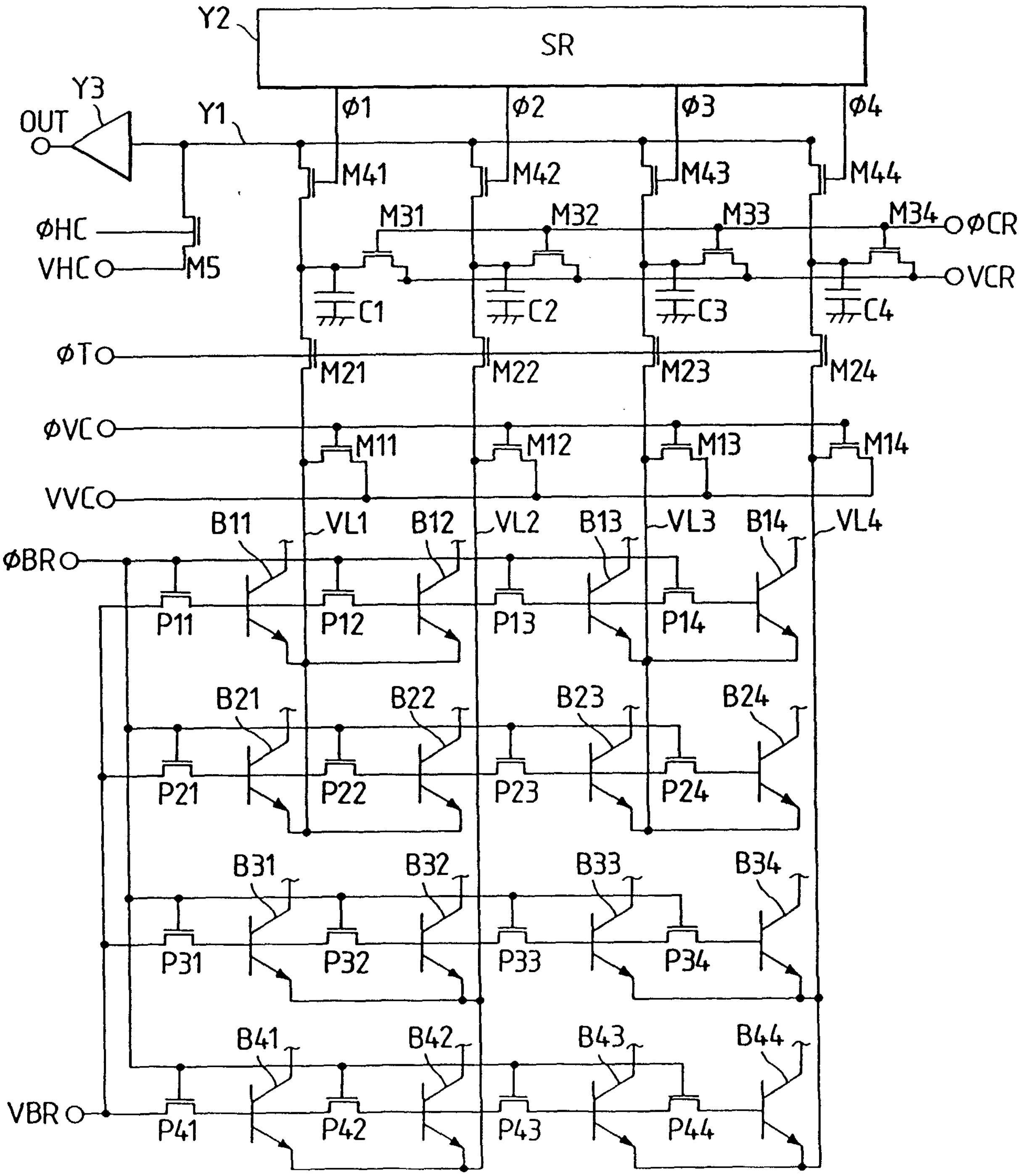
Y2
SR
Y3
OUT
Y1
φ1
φ2
φ3
φ4
M41
M42
M43
M44
φHC
VHC
M5
M31
M32
M33
M34
φCR
VCR
C1
C2
C3
C4
φT
M21
M22
M23
M24
φVC
M11
M12
M13
M14
VVC
B11
VL1
B12
VL2
B13
VL3
B14
VL4
φBR
P11
P12
P13
P14
B21
B22
B23
B24
P21
P22
P23
P24
B31
B32
B33
B34
P31
P32
P33
P34
B41
B42
B43
B44
VBR
P41
P42
P43
P44

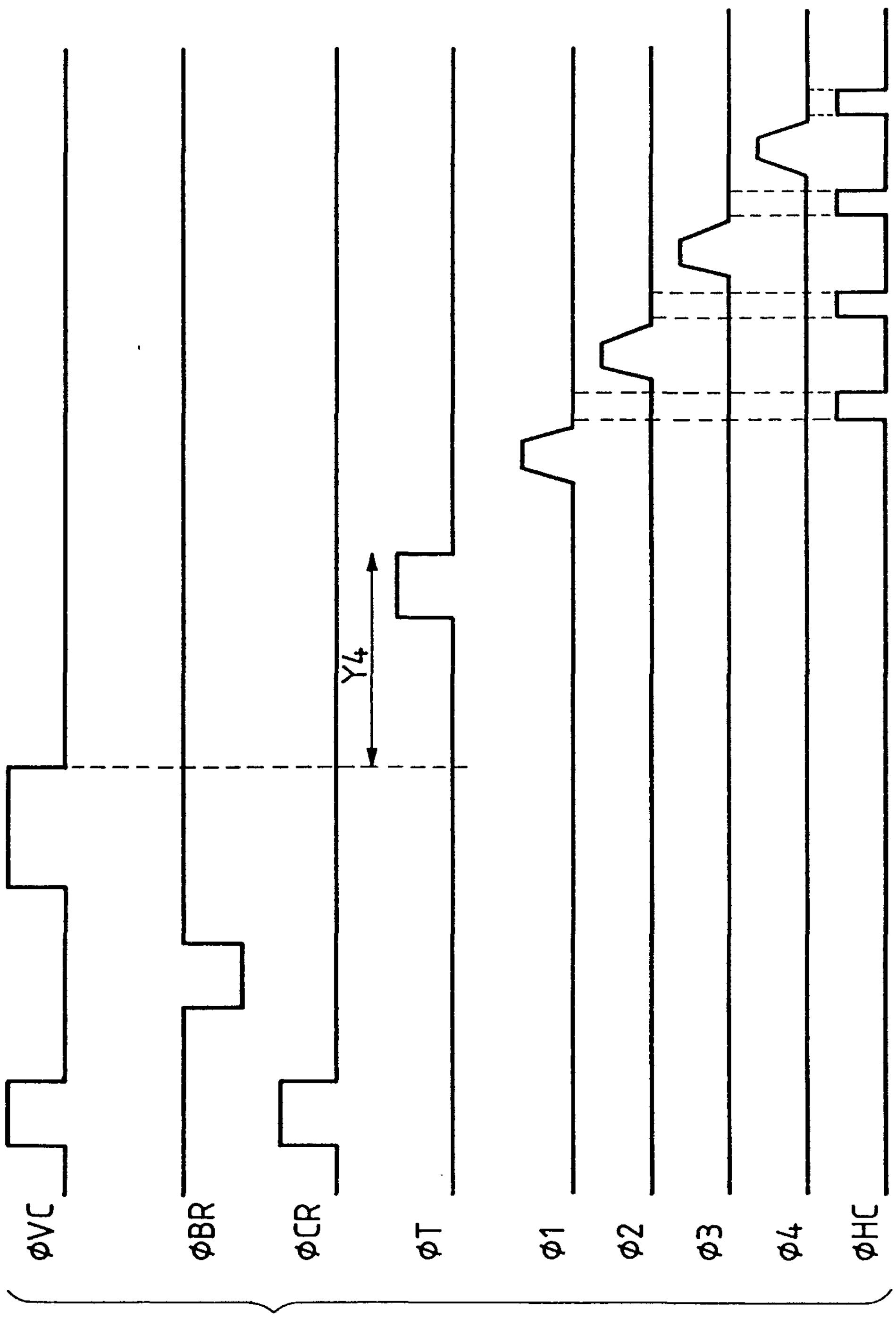


FIG. 8

FIG. 9

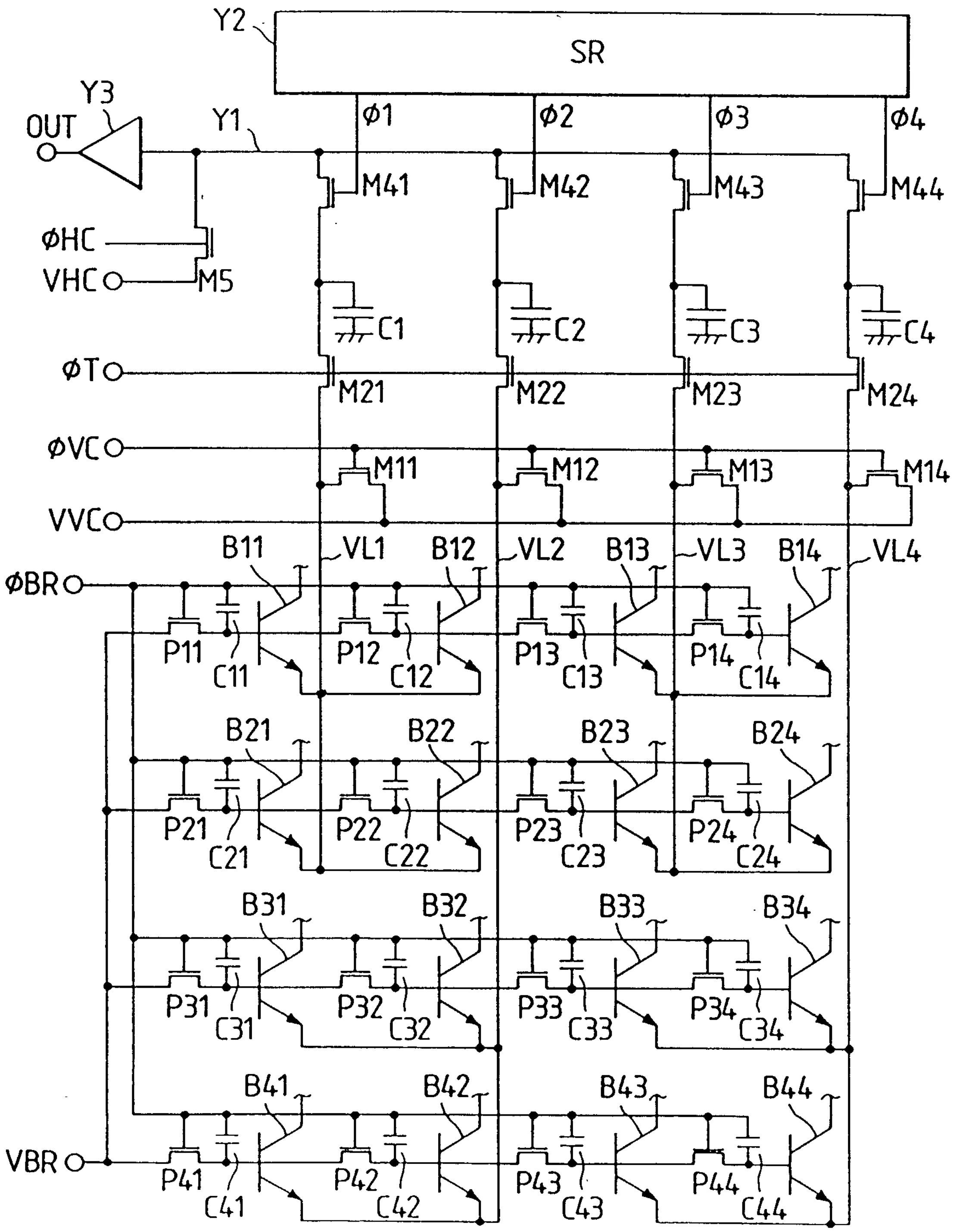
Y2
SR
Y3
OUT
Y1
φ1
φ2
φ3
φ4
M41
M42
M43
M44
φHC
VHC
M5
C1
C2
C3
C4
φT
M21
M22
M23
M24
φVC
M11
M12
M13
M14
VVC
B11
VL1
B12
VL2
B13
VL3
B14
VL4
φBR
P11
C11
P12
C12
P13
C13
P14
C14
B21
B22
B23
B24
P21
C21
P22
C22
P23
C23
P24
C24
B31
B32
B33
B34
P31
C31
P32
C32
P33
C33
P34
C34
B41
B42
B43
B44
VBR
P41
C41
P42
C42
P43
C43
P44
C44

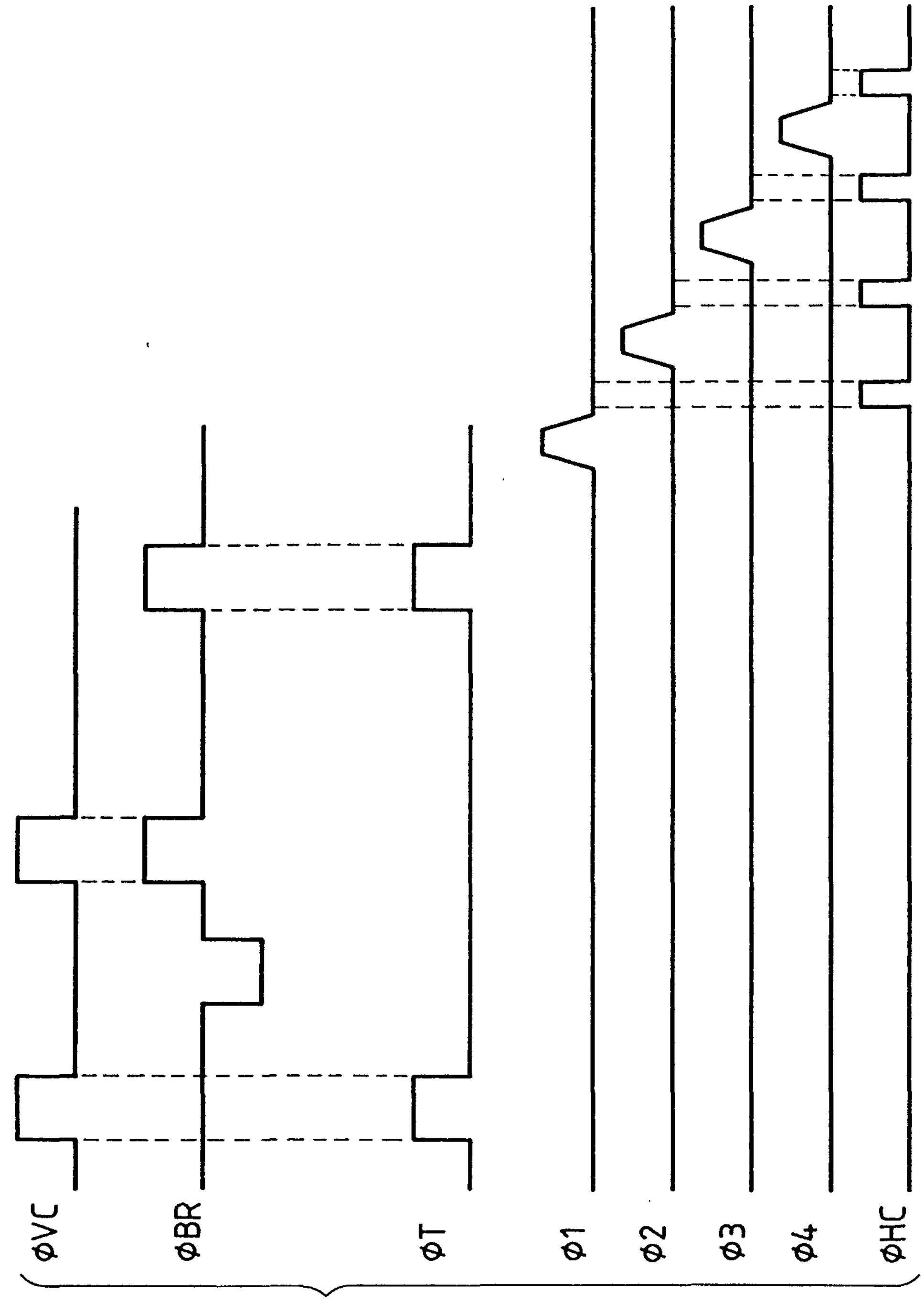


FIG. 10

FIG. 11

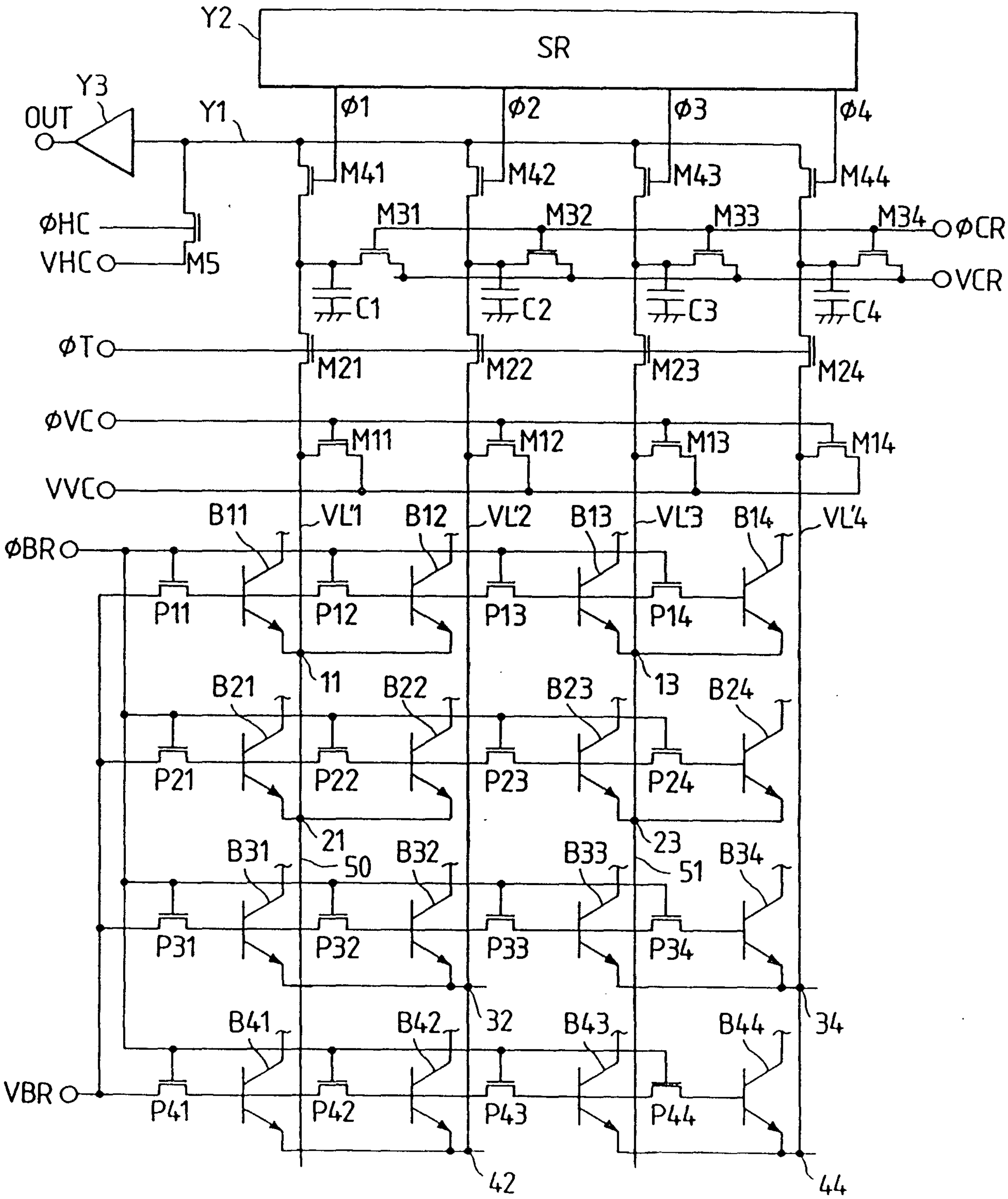
Y2
SR
Y3
OUT
Y1
ϕ1
ϕ2
ϕ3
ϕ4
M41
M42
M43
M44
ϕHC
VHC
M5
M31
M32
M33
M34
ϕCR
VCR
C1
C2
C3
C4
ϕT
M21
M22
M23
M24
ϕVC
M11
M12
M13
M14
VVC
B11
VL'1
B12
VL'2
B13
VL'3
B14
VL'4
ϕBR
P11
P12
P13
P14
11
13
B21
B22
B23
B24
P21
P22
P23
P24
21
23
B31
50
B32
B33
51
B34
P31
P32
P33
P34
32
34
B41
B42
B43
B44
VBR
P41
P42
P43
P44
42
44

FIG. 12

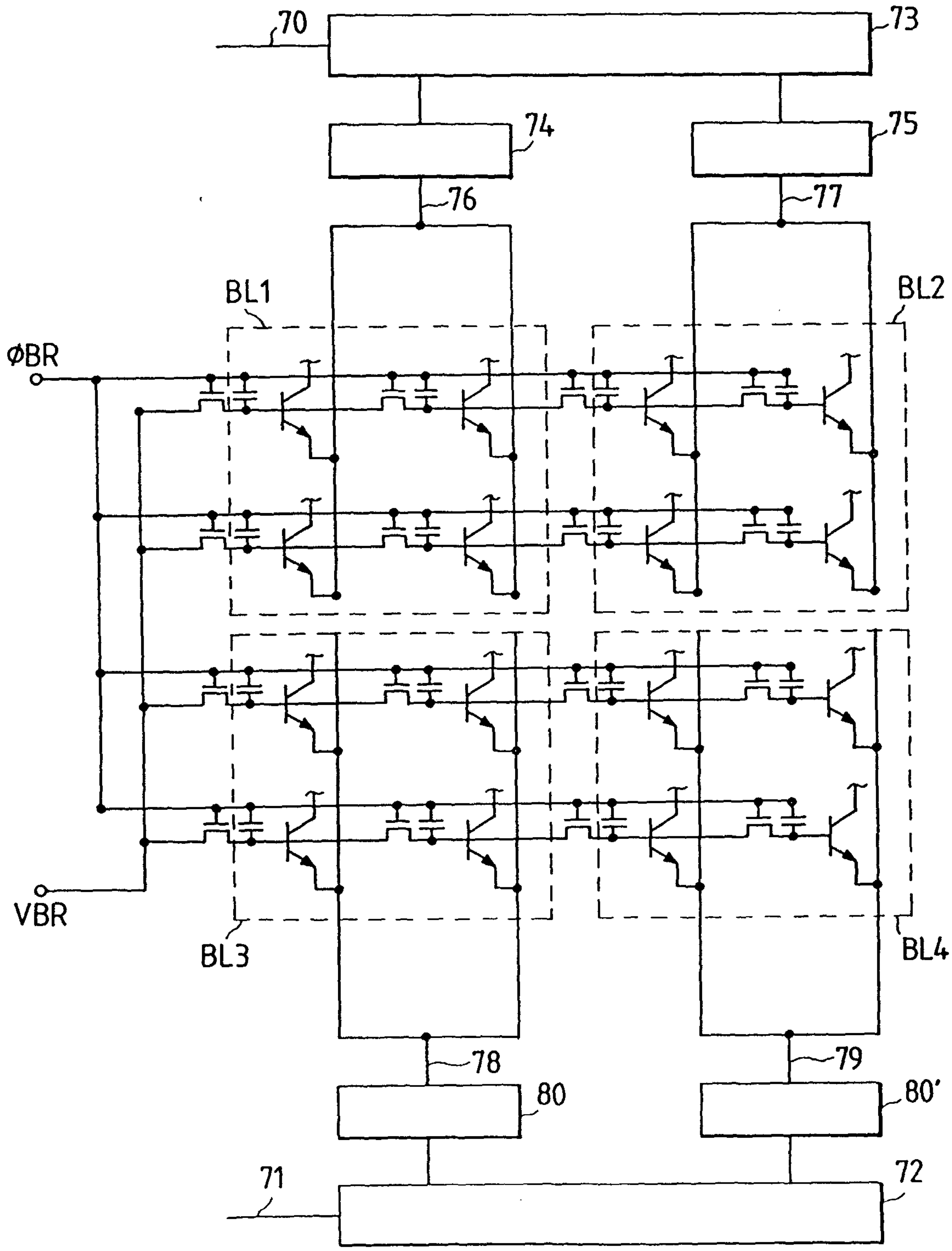

FIG. 13

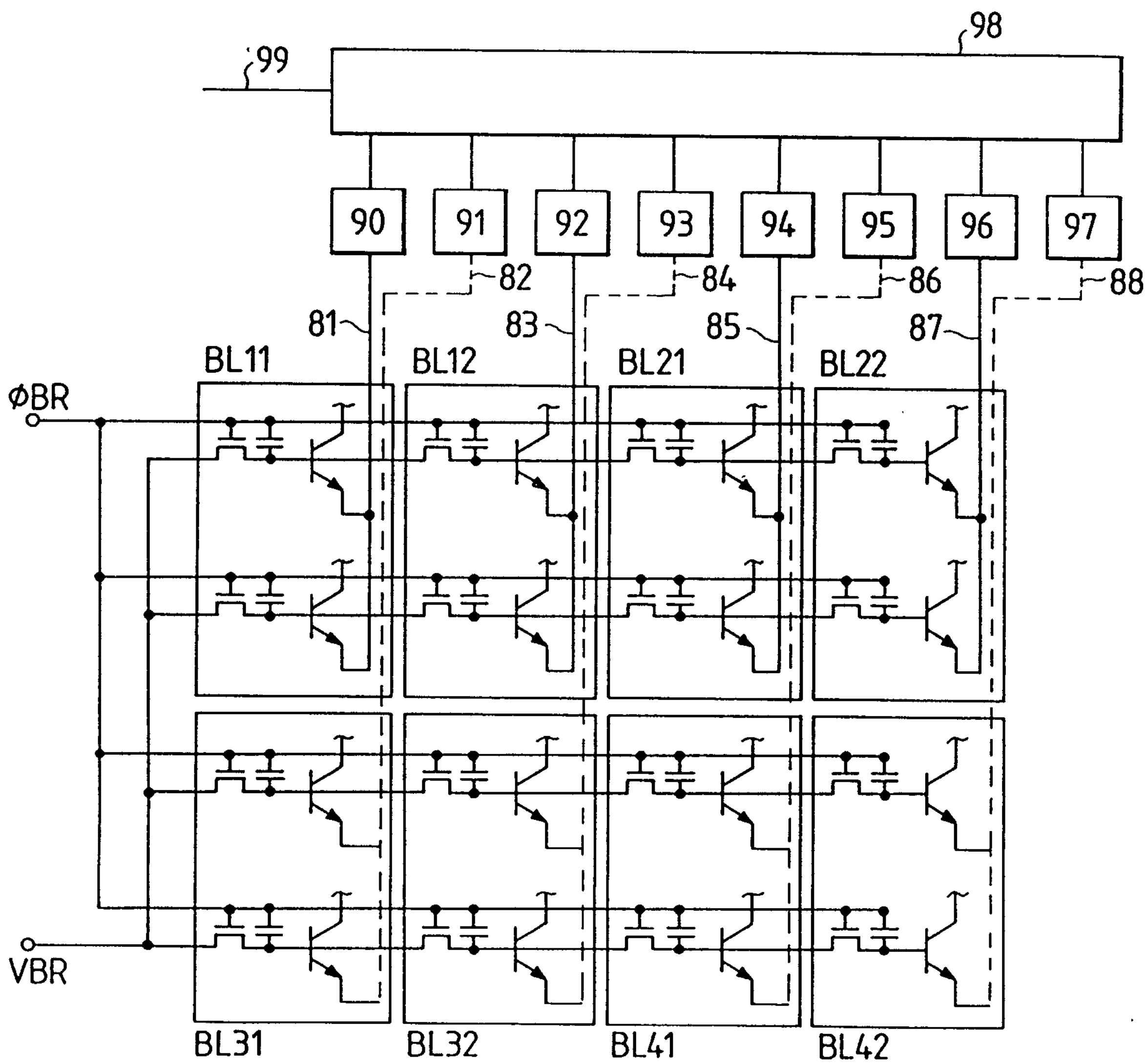
98
99
90
91
92
93
94
95
96
97
81
82
83
84
85
86
87
88
BL11
BL12
BL21
BL22
ØBR
VBR
BL31
BL32
BL41
BL42

FIG. 14

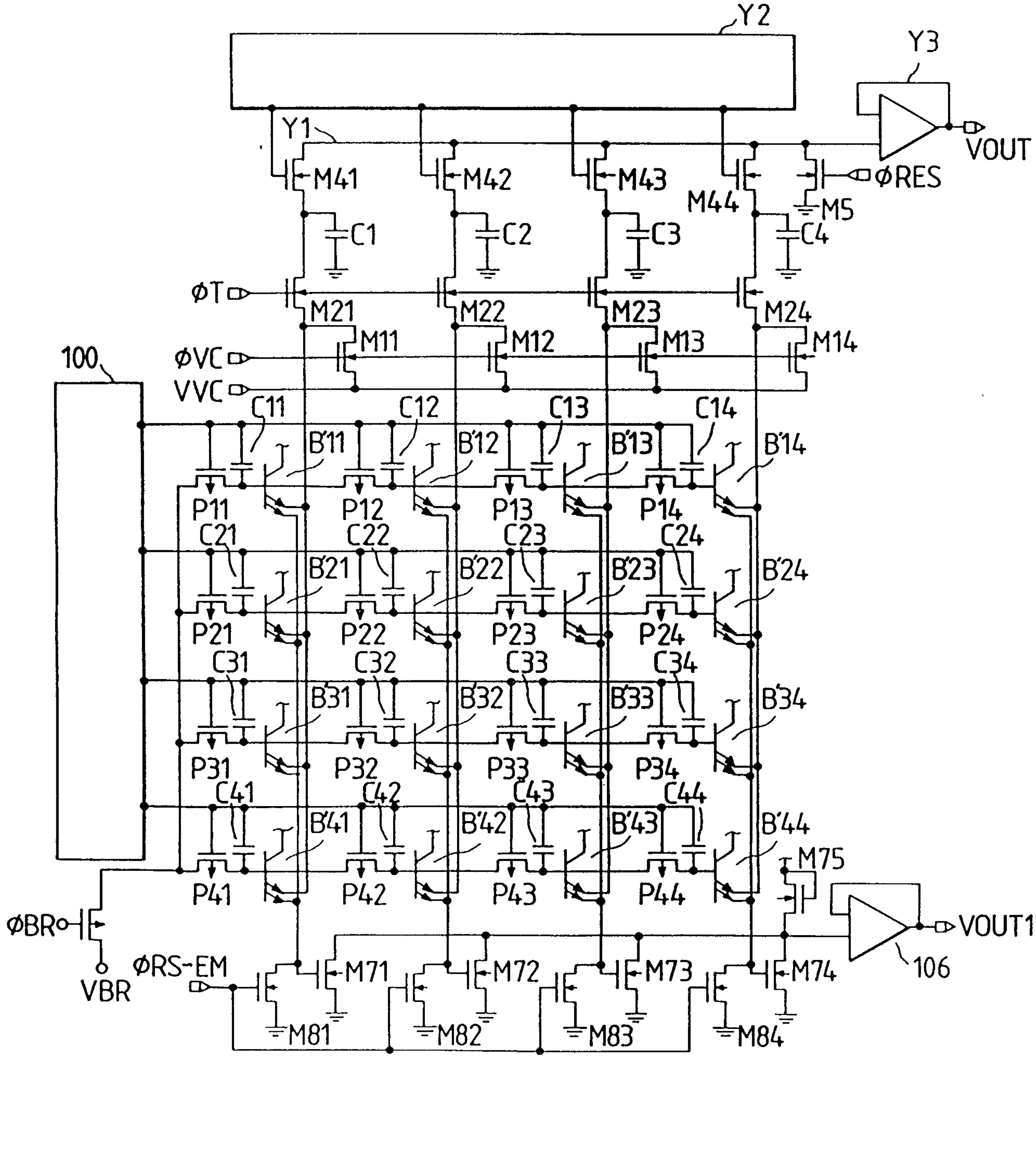
Y2
Y3
Y1
VOUT
M41
M42
M43
M44
ØRES
M5
C1
C2
C3
C4
ØT
M21
M22
M23
M24
100
ØVC
VVC
M11
M12
M13
M14
C11
C12
C13
C14
B'11
B'12
B'13
B'14
P11
P12
P13
P14
C21
C22
C23
C24
B'21
B'22
B'23
B'24
P21
P22
P23
P24
C31
C32
C33
C34
B'31
B'32
B'33
B'34
P31
P32
P33
P34
C41
C42
C43
C44
B'41
B'42
B'43
B'44
P41
P42
P43
P44
M75
ØBR
VOUT1
VBR
ØRS-EM
M71
M72
M73
M74
106
M81
M82
M83
M84